# EUROPÄISCHE PATENTSCHRIFT

(11) **EP 3 587 173 B1**
(45) Veröffentlichungstag und Bekanntmachung des Hinweises auf die Patenterteilung: **16.09.2020**
(21) Anmeldenummer: 19180624.9
(22) Anmeldetag: 17.06.2019
(51) Int. Cl.: B60N 2/16, B60N 2/50

(54) **VERSTELLBARER HÖHENBEGRENZER**
ADJUSTABLE HEIGHT RESTRICTOR
LIMITEUR DE HAUTEUR RÉGLABLE

(30) Priorität: 28.06.2018 DE 102018115607
(43) Veröffentlichungstag der Anmeldung: 01.01.2020
(73) Patentinhaber: Grammer AG, 92224 Amberg (DE)
(72) Erfinder: Fillep, Johannes, 92262 Birgland (DE); Schanderl, Florian, 92521 Schwarzenfeld (DE)
(74) Vertreter: Hannke, Christian

(56) Entgegenhaltungen:
- US-A- 3 760 911
- US-A- 5 005 677

## Beschreibung

Die Erfindung betrifft einen verstellbaren Höhenbegrenzer für einen Fahrzeugsitz.

Höhenbegrenzer für einen Fahrzeugsitz sind aus dem Stand der Technik bekannt, insbesondere weisen derartige Höhenbegrenzer lediglich einen unteren Endanschlag und einen oberen Endanschlag auf, sodass eine Bewegung des Fahrzeugsitzes nach unten oder nach oben durch den Höhenbegrenzer begrenzt und gestoppt wird.

Da jedoch Personen unterschiedlicher Größen auf dem gleichen Fahrzeugsitz Platz nehmen können, hat jede Person ein anderes Gefühl und Bedürfnis hinsichtlich der Höhenbegrenzung des Fahrzeugsitzes. Aus dem Stand der Technik sind Höhenbegrenzer bekannt, welche eine Einstellbarkeit der Höhenbegrenzung an den Tag legen, jedoch sehr aufwändig ausgestaltet sind und umständlich zu bedienen sind.

Aus dem Stand der Technik ist gemäß US 5 005 677 A ein gattungsgemäßer verstellbarer Höhenbegrenzer für einen Fahrzeugsitz bekannt.

Es ist demzufolge Aufgabe der vorliegenden Erfindung, einen verstellbaren Höhenbegrenzer bereitzustellen, mittels welchem die genannten Nachteile des Standes der Technik überwunden werden können.

Diese Aufgabe wird gemäß den Merkmalen der Patentansprüche 1, 10 und 11 gelöst. Vorteilhafte Ausgestaltungen der Erfindung finden sich in den abhängigen Patentansprüchen.

Kerngedanke der Erfindung ist es, einen verstellbaren Höhenbegrenzer für einen Fahrzeugsitz bereitzustellen, umfassend: einen Grundkörper mit einem Langloch, welches ein erstes Ende und ein zweites Ende aufweist, ein gegenüber dem Grundkörper verschiebbares Kolbenstangenelement mit einem Stiftelement, welches in dem Langloch geführt ist, ein gegenüber dem Grundkörper drehbares erstes Hülsenelement, welches den Grundkörper zumindest teilweise umschließt, wobei das erste Hülsenelement eine gegenüber dem Grundkörper helixförmige erste Berandung aufweist, wobei die erste Berandung in Erstreckungsrichtung des Langlochs gesehen zwischen dem ersten Ende und dem zweiten Ende und das Stiftelement zwischen dem ersten Ende und der ersten Berandung angeordnet ist.

Besonders bevorzugt ist der Grundkörper zylinderförmig ausgebildet, wobei insbesondere die Erstreckungsrichtung des Grundkörpers mit der Erstreckungsrichtung des Langlochs übereinstimmt.

Gemäß einer weiteren bevorzugten Ausführungsform ist das Kolbenstangenelement zumindest teilweise innerhalb des Grundkörpers verlaufend angeordnet. Weiter vorzugsweise ist das Stiftelement senkrecht zu der Erstreckungsrichtung des Kolbenstangenelements ausgerichtet, wobei insbesondere die Erstreckungsrichtung des Kolbenstangenelements gleichbedeutend ist mit der Erstreckungsrichtung des Grundkörpers sowie der Erstreckungsrichtung des Langlochs.

Erfindungsgemäß ist das gegenüber dem Grundkörper drehbare erste Hülsenelement vorgesehen, welches den Grundkörper zumindest teilweise umschließt. Besonders bevorzugt umschließt das erste Hülsenelement in einer Umfangsrichtung des Grundkörpers den Grundkörper durchgehend, jedoch in der Erstreckungsrichtung des Grundkörpers nur teilweise.

Weiter weist erfindungsgemäß das erste Hülsenelement eine helixförmige erste Berandung auf, das heißt, dass die erste Berandung mit der Oberfläche des vorzugsweise zylinderförmigen Grundkörpers in Kontakt steht. Besonders bevorzugt weist die helixförmige erste Berandung eine einzige Windung auf. Weiter ist auch die Ganghöhe der helixförmigen ersten Berandung vorbestimmt und weist einen ersten Wert auf.

Die Funktionsweise des erfindungsgemäßen Höhenbegrenzers für einen Fahrzeugsitz ist dabei wie folgt. Angenommen, es wäre kein Hülsenelement vorgesehen, dann wäre die Bewegung des Kolbenstangenelements begrenzt durch das erste Ende und das zweite Ende des Langlochs, wobei die Kontaktierung des Führungsstifts mit dem ersten Ende eine Begrenzung nach unten und die Kontaktierung des Führungsstifts mit dem zweiten Ende eine Begrenzung nach oben darstellt.

Dadurch, dass nun erfindungsgemäß ein erstes Hülsenelement vorgesehen ist und die erste Berandung des ersten Hülsenelements zwischen dem ersten Ende des Langlochs und dem zweiten Ende des Langlochs angeordnet ist und das Stiftelement zwischen dem ersten Ende und der ersten Berandung angeordnet ist, ist eine Begrenzung der Bewegung des Kolbenstangenelements einerseits durch das erste Ende des Langlochs und andererseits durch die erste Berandung begrenzt.

Gemäß einer besonders bevorzugten Ausführungsform ist es daher vorteilhaft, wenn das Stiftelement sich durch das Langloch hindurch erstreckt, das heißt, dass sich das Stiftelement von dem Grundkörper, insbesondere einer äußeren Oberfläche des Grundkörpers, weg erstreckt.

Gemäß einer weiteren bevorzugten Ausführungsform ist ein gegenüber dem Grundkörper drehbares zweites Hülsenelement, welches den Grundkörper zumindest teilweise umschließt, vorgesehen, wobei das zweite Hülsenelement eine helixförmige zweite Berandung aufweist, wobei die zweite Berandung in Erstreckungsrichtung des Langlochs gesehen zwischen dem ersten Ende und dem Stiftelement angeordnet ist.

Insbesondere bedeutet dies also, dass das Stiftelement nun zwischen der ersten Berandung und der zweiten Berandung angeordnet ist.

Wird das erste Hülsenelement und gegebenenfalls das zweite Hülsenelement gegenüber dem Grundkörper gedreht, so ändert sich aufgrund der helixförmigen Ausgestaltung der Hülsenelemente der Abstand zwischen dem ersten Ende und der ersten Berandung beziehungsweise der Abstand zwischen der ersten Berandung und der zweiten Berandung.

Insbesondere können die Ausgestaltungen für das erste Hülsenelement auch für das zweite Hülsenelement zutreffen, so dass das zweite Hülsenelement nachstehend nicht zusätzlich beschrieben wird, falls dies als nicht notwendig erscheint.

Gemäß einer besonders bevorzugten Ausführungsform ist mit dem ersten Hülsenelement ein erstes Ende eines ersten Bowdenzugs verbunden, wobei durch Betätigung des ersten Bowdenzugs das erste Hülsenelement drehbar ist.

Weiter ist es denkbar, dass ein erstes Ende eines zweiten Bowdenzugs mit dem zweiten Hülsenelement verbunden ist, wobei durch Betätigung des zweiten Bowdenzugs das zweite Hülsenelement drehbar ist.

Durch Drehung des ersten Hülsenelements und gegebenenfalls des zweiten Hülsenelements wird der Abstand zwischen dem ersten Ende und der ersten Berandung und gegebenenfalls der Abstand zwischen der ersten Berandung und der zweiten Berandung verändert, insbesondere abhängig von der jeweiligen Person, welche auf dem Fahrzeugsitz Platz nimmt.

Das erste Ende des jeweiligen Bowdenzugs ist dabei derart, dass lediglich Zugkräfte übertragen werden. Nach einer Drehung eines Hülsenelements in eine Richtung ist es daher zunächst schwierig, das Hülsenelement in die andere Richtung zu drehen.

Gemäß einer weiteren bevorzugten Ausführungsform ist es daher vorteilhaft, dass ein erstes Federelement umfassend ein erstes Federende und ein zweites Federende vorgesehen ist, wobei das erste Federende mit dem Grundkörper und das zweite Federende mit dem ersten Hülsenelement verbunden ist. Dies hat die Wirkung, dass bei einer Drehung des ersten Hülsenelements Rückstellkräfte durch das erste Federelement erzeugt werden, welche der Drehung des ersten Hülsenelements entgegenwirken.

Gemäß einer weiteren bevorzugten Ausführungsform ist es daher vorteilhaft, dass ein zweites Federelement umfassend ein erstes Federende und ein zweites Federende vorgesehen ist, wobei das erste Federende mit dem Grundkörper und das zweite Federende mit dem zweiten Hülsenelement verbunden ist. Dies hat die Wirkung, dass bei einer Drehung des zweiten Hülsenelements Rückstellkräfte durch das zweite Federelement erzeugt werden, welche der Drehung des zweiten Hülsenelements entgegenwirken.

Das erste Federelement und gegebenenfalls das zweite Federelement sind dabei vorzugsweise als eine Drehfeder ausgebildet.

Gemäß einer weiteren bevorzugten Ausführungsform ist die erste Berandung wellenförmig ausgebildet. Das heißt, dass die erste Berandung Berge und Täler aufweist, wobei vorzugsweise die Täler derart geformt sind, dass die Täler mit dem Führungsstift in Kontakt bringbar sind. Die Täler können daher als Rastungen angesehen werden, wobei vorzugsweise die angrenzenden Berge unterstützend wirken.

Gemäß einer alternativen Ausführungsform weist die erste Berandung einen ersten flächigen Abschnitt auf und weiter bevorzugt einen zweiten flächigen Abschnitt. Dadurch, dass die erste Berandung einen ersten flächigen Abschnitt aufweist, kann der Abstand zwischen dem ersten Ende des Langlochs und der Berandung stufenlos eingestellt werden.

Gemäß einer weiteren bevorzugten Ausführungsform ist ein erstes Befestigungsohr an dem Grundkörper und ein zweites Befestigungsohr an dem Kolbenstangenelement angeordnet, wobei das erste und das zweite Befestigungsohr jeweils ein elastisches Element aufweisen.

Besonders bevorzugt sind die Abmaße der Befestigungsohren derart, dass eine Befestigung an einer entsprechenden Stelle des Fahrzeugsitzes möglich ist.

Besonders bevorzugt besteht das elastische Element aus Cellasto.

Durch den Einsatz elastischer Elemente ist es möglich, bei Erreichen des jeweiligen Anschlags, also das erste Ende des Langlochs und der ersten Berandung beziehungsweise der ersten Berandung und der zweiten Berandung, Kraftspitzen zu dämpfen und daher zu verringern.

Gemäß einer weiteren bevorzugten Ausführungsform ist ein erstes Führungselement vorgesehen, welches mit dem Grundkörper starr verbunden ist und dazu vorgesehen ist, den ersten Bowdenzug zu führen. Ebenso ist es vorstellbar, dass das Führungselement als ein Endanschlag für das erste Ende des ersten Bowdenzugs dient.

Vorzugsweise ist auch ein zweites Führungselement vorgesehen, wenn ein zweiter Bowdenzug für ein zweites Hülsenelement vorgesehen ist.

In einer alternativen Ausführungsform, welche nicht Teil der Erfindung ist, wird die Aufgabe gelöst von einem verstellbaren Höhenbegrenzer für einen Fahrzeugsitz, umfassend: einen Grundkörper mit einem ersten Deckelelement, ein gegenüber dem Grundkörper und zumindest teilweise innerhalb des Grundkörpers angeordnetes verschiebbares und drehbar gelagertes Basiselement, wobei das Deckelelement in transversaler Richtung gesehen eine erste Abstufung ausgebildet hat und das Basiselement in transversaler Richtung gesehen eine zweite Abstufung ausgebildet hat, wobei die erste Abstufung und die zweite Abstufung in Kontakt bringbar sind.

Insbesondere ist die zweite Abstufung des Basiselements der ersten Abstufung gegenüberliegend.

Durch Drehung des Basiselements, was einhergeht mit einer Drehung der zweiten Abstufung, wird die zweite Abstufung gegenüber der ersten Abstufung verdreht und im Kontaktierungsfall kontaktieren daher die Abstufung sich gegenseitig auf eine andere Art und Weise.

Ebenso ist es denkbar, dass das Basiselement mit einem Bowdenzug sowie einem Federelement verbunden sein kann wie das erste Hülsenelement.

Weiter wird die zugrunde liegende Aufgabe gelöst von einem Fahrzeugsitz mit einem verstellbaren Höhenbegrenzer gemäß einer Ausführungsform.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: einen Höhenbegrenzer gemäß einer bevorzugten Ausführungsform in einer perspektivischen Ansicht;
- Fig. 2: den Höhenbegrenzer der Figur 1 in einer Draufsicht;
- Fig. 3: Schnitt des Höhenbegrenzers der Figur 2 gemäß der Linie A-A;
- Fig. 4A: eine weiterführende Ausführungsform des Höhenbegrenzers nach Figur 1 in einer ersten Seitenansicht;
- Fig. 4B: den Höhenbegrenzer nach Figur 4A in einer zweiten Seitenansicht;
- Fig. 5: ein in einem Fahrzeugsitz angeordneten Höhenbegrenzer.

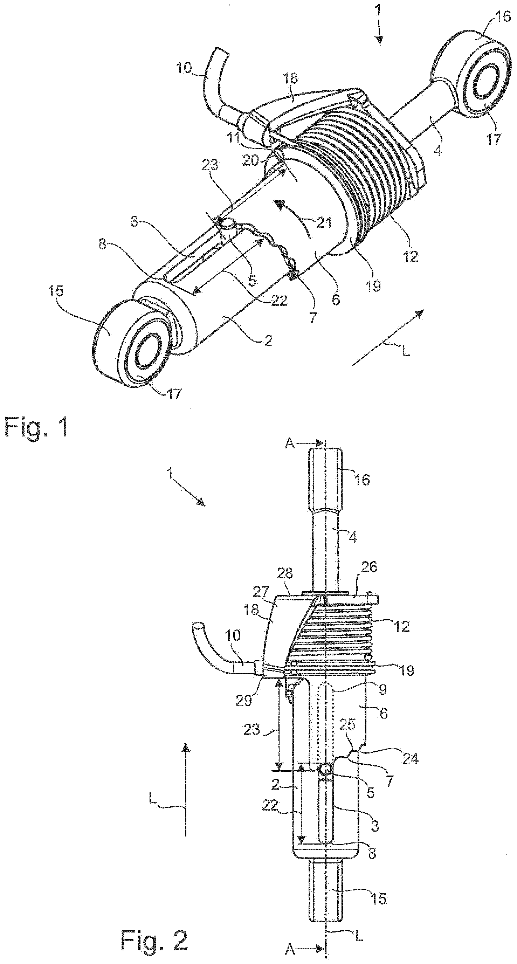

In der Figur 1 ist ein verstellbarer Höhenbegrenzer 1 dargestellt, mit einem Grundkörper 2, welcher ein Langloch 3 aufweist, wobei das Langloch 3 ein erstes Ende 8 und ein zweites Ende 9 (hier nicht gezeigt) aufweist. Durch das Langloch 3 ist ein Stiftelement 5 geführt, welcher insbesondere durch das Langloch 3 hindurchragt und sich von der Oberseite des Grundkörpers 2 weiter erstreckt. Das Stiftelement 5 ist mit dem Kolbenstangenelement 4 verbunden, wobei das Kolbenstangenelement 4 ein zweites Befestigungsohr 16 aufweist. Ebenso ist mit dem Grundkörper 2 ein erstes Befestigungsohr 15 verbunden. Insbesondere sind das erste Befestigungsohr 15 und das zweite Befestigungsohr 16 gleich ausgebildet und gleich ausgerichtet.

Weiter ist ein erstes Hülsenelement 6 mit einer ersten Berandung 7 erkennbar, wobei das erste Hülsenelement 6 den zylinderförmigen Grundkörper 2 in Umfangsrichtung umschließt. Die erste Berandung 7 ist hierbei zwischen dem Stiftelement 5 und dem zweiten Ende 9 des Langlochs 3 angeordnet, so dass die Endanschläge durch das erste Ende 8 des Langlochs 3 und der ersten Berandung 7 gegeben sind bei einer Verschiebung des Kolbenstangenelements 4 gegenüber dem Grundkörper 2.

Auf dem ersten Hülsenelement 6 ist eine in Umfangsrichtung verlaufende Führungsschiene 19 angeordnet, welche eine Aussparung 20 aufweist. In die Aussparung 20 ist es möglich, ein erstes Ende 11 eines ersten Bowdenzugs 10 einzuhängen und mit dem ersten Hülsenelement 6 zu verbinden.

Darüber hinaus ist ein erstes Führungselement 18 vorgesehen, welches mit dem Grundkörper 2 starr verbunden ist und vorgesehen ist, den ersten Bowdenzug 10 zu führen.

Durch eine Betätigung des ersten Bowdenzugs 10, wobei ein Zug auf das erste Ende 11 des ersten Bowdenzugs 10 ausgeübt wird, wird das erste Hülsenelement 6 entlang dem Pfeil 21 gedreht und entsprechend die erste Berandung 7 zwischen dem Stiftelement 5 und dem zweiten Ende 9 verändert, so dass sich der Abstand 22 zwischen dem ersten Ende 8 des Langlochs 3 und der ersten Berandung 7 verändert, da die erste Berandung 7 im Wesentlichen helixförmig ausgebildet ist.

Des Weiteren weist die helixförmige erste Berandung 7 eine einzige Windung auf und eine vorbestimmte Ganghöhe 23. Insbesondere ist, in Umfangsrichtung gesehen, das erste Ende 11 des ersten Bowdenzugs 10 am Ende der Windung der ersten Berandung 7 angeordnet, das heißt, dass bei einer Drehung des ersten Hülsenelements 6 das Ende der Berandung 7 die letzte einnehmbare Position der ersten Berandung zwischen dem Stiftelement 5 und dem zweiten Ende 9 ist.

Zusätzlich ist ein erstes Federelement 12 vorgesehen, welches einerseits mit dem Grundkörper 2 und andererseits mit dem ersten Hülsenelement 6 verbunden ist. Bevorzugt handelt es sich bei dem ersten Federelement 12 um eine Drehfeder. Insbesondere werden durch die Anordnung des ersten Federelements 12 bei einer Drehung des ersten Hülsenelements 6 Rückstellkräfte erzeugt, welcher dem Zug des Bowdenzugs 10 entgegenwirken, so dass wenn kein Zug mehr auf das erste Ende 11 des ersten Bowdenzugs 10 wirkt und der Bowdenzug nicht arretiert ist, das erste Ende 11 des ersten Bowdenzugs 10 rückgestellt wird in seine ursprüngliche Position, die vorbestimmt werden kann. Bevorzugt handelt es sich bei der ursprünglichen Position um die Position, in welcher der Abstand 22 der ersten Berandung 7 zu dem ersten Ende 8 des Langlochs 3 minimal ist. Die maximale Position ist entsprechend die Position, in welcher der Abstand 22 maximal ist. Durch Drehung des ersten Hülsenelements 6 kann der Abstand 22 verändert werden und entsprechend der Endanschlag.

In der Figur 2 ist eine Draufsicht des Höhenbegrenzers 1 der Figur 1 dargestellt, wobei in der Figur 2 zusätzlich der verdeckte Teil des Langlochs 3 eingezeichnet ist mit dem zweiten Ende 9 des Langlochs 3.

Wie zu erkennen ist, ist die erste Berandung 7 wellenförmig ausgebildet, das heißt, dass entlang der ersten Berandung 7 bzw. der Wendel sowohl Berge 24 als auch Täler 25 ausgebildet sind. Insbesondere sind die Täler 25 derart ausgebildet, um das Stiftelement 5 aufzunehmen, wobei die benachbarten Berge 24 eine gewisse Arretierung des Stiftelements 5 unterstützen.

Das erste Federelement 12 ist insbesondere, in Erstreckungsrichtung L gesehen, zwischen einem ersten Basisabschnitt 26 des ersten Führungselements 18 und der ersten Führungsschiene 19 angeordnet, wobei der erste Basisabschnitt 26 mit dem Grundkörper 2 starr verbunden ist. Weiter weist das erste Führungselement 18 einen zweiten Basisabschnitt 27 des ersten Führungselements 18 auf, welcher mit dem ersten Basisabschnitt 26 einerseits und mit dem ersten Bowdenzug 10 andererseits verbunden ist, um den ersten Bowdenzug 10 zu halten und zu führen. Insbesondere erstreckt sich der zweite Basisabschnitt 27 in Erstreckungsrichtung L und ist mittels eines ersten Endes 28 mit dem ersten Basisabschnitt 26 verbunden, wobei ein zweites Ende 29 ausgebildet ist, den ersten Bowdenzug 10 zu halten und zu führen.

Besonders bevorzugt wird der erste Bowdenzug 10 durch das erste Führungselement 18 derart gehalten, dass der erste Bowdenzug zwischen dem zweiten Ende 29 des zweiten Basisabschnitts bis zu dem ersten Ende 11 des ersten Bowdenzugs 10 senkrecht zu der Erstreckungsrichtung L verläuft.

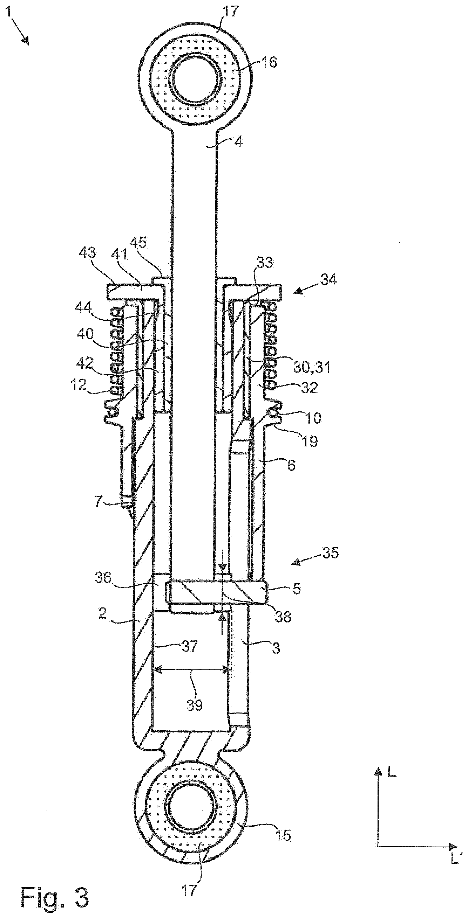

In der Figur 3 ist der Höhenbegrenzer 1 der Figur 2 gemäß dem gezeigten Schnitt A-A gezeigt. Hierbei sind weiter Lagerungen von gewissen Elementen näher beschrieben.

Wie zu erkennen ist, weist der Grundkörper 2 eine erste Einkerbung 30 auf, in einer Richtung L' senkrecht zu der Erstreckungsrichtung L gesehen. In diese Einkerbung 30 ist ein erster Materialeintrag 31 eingebracht, welcher einerseits mit dem Grundkörper 2 und andererseits mit dem ersten Hülsenelement 6 in Verbindung steht, wobei besonders bevorzugt der erste Materialeintrag einen ersten Abschnitt 32 und einen zweiten Abschnitt 33 aufweist, wobei der erste Abschnitt 32 sich hauptsächlich in Erstreckungsrichtung L und der zweite Abschnitt 33 sich hauptsächlich in Richtung L' erstreckt, also senkrecht zu dem ersten Abschnitt 32. Das erste Hülsenelement 6 steht dabei wie bereits angemerkt mit dem ersten Materialeintrag 31 in Kontakt, also folglich mit dem ersten Abschnitt 32 sowie mit dem zweiten Abschnitt 33. Insbesondere steht ein erstes Ende 34 des ersten Hülsenelements. Besonders bevorzugt ist der erste Materialeintrag 31 aus einem Material gebildet, welches gleitende Eigenschaften aufweist, um die Drehung des ersten Hülsenelements 6 gegenüber dem Grundkörper 2 zu erleichtern.

Das Stiftelement 5 ist erfindungsgemäß mit dem Kolbstangenelement 4 verbunden, besonders bevorzugt ist das Stiftelement 5 mit einem ersten Ende 35 des Kolbenstangenelements 4 verbunden, wobei das erste Ende 35 innerhalb des Grundkörpers 2 angeordnet ist.

Weiter ist an dem ersten Ende 35 des Kolbenstangenelements 4 mit einem ersten Gleitelement 36 verbunden, welches mit einer inneren Oberfläche 37 des Grundkörpers 2 in Kontakt steht. Bevorzugt ist das erste Gleitelement 36 aus einem Material mit gleitenden Eigenschaften gebildet. Dabei weist das erste Gleitelement 36 eine erste Ausdehnung 38 in Erstreckungsrichtung L und eine zweite Ausdehnung 39 in Richtung L' senkrecht zu der Erstreckungsrichtung L. Bevorzugt ist die zweite Ausdehnung 39 größer als die Ausdehnung des Stiftelements 5 in Erstreckungsrichtung L, wobei das erste Gleitelement 36 das Stiftelement 5 teilweise umschließt. Die zweite Ausdehnung 39 entspricht ebenso der Ausdehnung des Inneren des Grundkörpers 2.

Weiter sind ein zweites Gleitelement 40 und ein drittes Gleitelement 41 vorgesehen, wobei das zweite Gleitelement 40 einerseits mit dem Kolbenstangenelement 4 und andererseits mit dem dritten Gleitelement 41 in Kontakt steht und das dritte Gleitelement 41 einerseits mit dem zweiten Gleitelement 40 und dem Grundkörper 2 andererseits, insbesondere mit der inneren Oberfläche 37 des Grundkörpers 2, in Kontakt steht. Das Kolbenstangenelement 4 wird entsprechend von dem zweiten Gleitelement 40 umschlossen, und das zweite Gleitelement 40 von dem dritten Gleitelement 41 umschlossen und das dritte Gleitelement 41 von dem Grundkörper 2 umschlossen.

Das Kolbenstangenelement 4 ist daher durch das zweite Gleitelement 40 und dritte Gleitelement 41 gegenüber dem Grundkörper 2 geführt gelagert.

Vorzugsweise weist das zweite Gleitelement einen ersten Abschnitt 42 und einen zweiten Abschnitt 43 auf, wobei der erste Abschnitt 42 sich in Erstreckungsrichtung L und sich der zweite Abschnitt 43 sich in Richtung L' senkrecht zu der Erstreckungsrichtung L erstreckt. Ebenso weist das dritte Gleitelement einen ersten Abschnitt 44 und einen zweiten Abschnitt 45 auf, wobei der erste Abschnitt 44 sich in Erstreckungsrichtung L und sich der zweite Abschnitt 45 sich in Richtung L' senkrecht zu der Erstreckungsrichtung L erstreckt.

Der zweite Abschnitt 43 kann ebenso den ersten Basisabschnitt 26 des ersten Führungselements 18 darstellen.

In Erstreckungsrichtung L gesehen ist der zweite Abschnitt 33 des ersten Materialeintrags 31 vor dem zweiten Abschnitt 43 des zweiten Gleitelements 40 und der zweite Abschnitt 43 des zweiten Gleitelements 40 vor dem zweiten Abschnitt 45 des dritten Gleitelements 41 angeordnet.

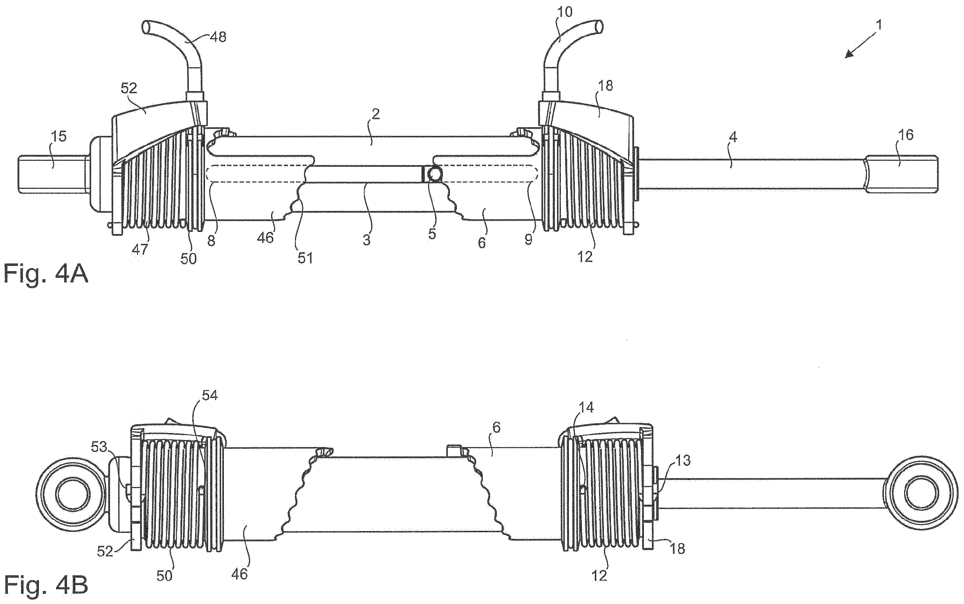

In den Figuren 4A und 4B sind weitergehende und auf den vorhergehenden Ausführungsformen basierende Ausführungsformen eines Höhenbegrenzers aufgezeigt.

Zusätzlich zu dem ersten Hülsenelement 6 ist ein zweites Hülsenelement 46 vorgesehen, welches ebenso wie das erste Hülsenelement 6 gegenüber dem Grundkörper 2 drehbar ist und eine helixförmige zweite Berandung 51 aufweist. Insbesondere weist die zweite Berandung 51 eine andere Windungsrichtung als die erste Berandung 7 auf. Die Hülsenelemente 6, 51 sind derart angeordnet, dass sich die Berandungen 7, 51 zugewandt sind.

Weiter sind die Ausführungen für das erste Hülsenelement 6, die erste Führungsschiene 19, den ersten Bowdenzug 10, das erste Ende 11 des ersten Bowdenzugs 10, die erste Berandung 7, das erste Führungselement 18 und das erste Federelement 23 analog übertragbar auf das zweite Hülsenelement 46, die zweite Führungsschiene 50, den zweiten Bowdenzug 48, das erste Ende 49 des zweiten Bowdenzugs 48, die zweite Berandung 51, das zweite Führungselement 52 und das zweite Federelement 47.

Dabei können der erste Bowdenzug 10 und der zweite Bowdenzug 48 unabhängig voneinander betätigt werden, so dass der untere Anschlag als auch der obere Anschlag individuell angepasst werden können. Nochmals sei erwähnt, dass ein Anschlag ist, wenn das Stiftelement in seiner Bewegung begrenzt wird, gemäß den Figuren 4A und 4B durch die erste Berandung 7 und die zweite Berandung 51. Die zweite Berandung 51 ist hierbei zwischen dem ersten Ende 8 des Langlochs 3 und dem Führungsstift 5 angeordnet.

Der Höhenbegrenzer 1 der Figur 4B ist gleich dem Höhenbegrenzer 4A, jedoch dargestellt in einer anderen Ansicht. Hierbei ist zu erkennen, dass das erste Federende 13 mit dem Grundkörper 2 starr mittels des ersten Führungselements 18 verbunden ist und das zweite Federende 14 mit dem ersten Hülsenelement 6 verbunden ist. Analog ist das erste Federende 53 der zweiten Federeinheit 50 mit dem zweiten Führungselement 52 verbunden und das zweite Federende 54 mit dem zweiten Hülsenelement 46.

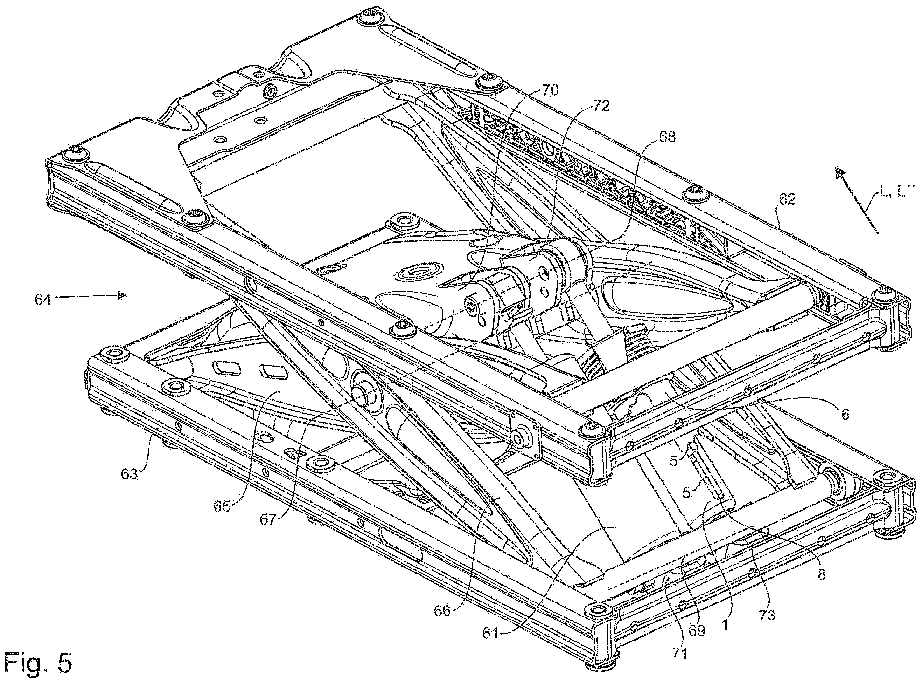

In der Figur 5 ist eine mögliche Befestigung des Höhenbegrenzers 1 in einem Fahrzeugsitz 60 dargestellt, wobei nur ein unterer Teil des Fahrzeugsitzes 60 dargestellt ist.

Dabei ist ein Oberteil 62 und ein Unterteil 63 zu erkennen, wobei das Oberteil 62 relativ gegenüber dem Unterteil 63 verlagerbar ist und wobei die Bewegung des Oberteils 62 durch ein Scherengestell 64 geführt ist. Das Scherengestell 64 weist eine erste Schere 65 und eine zweite Schere 66 auf, wobei die erste Schere 65 und die zweite Schere 66 schwenkbar um eine erste Drehachse 67 verbunden sind.

Weiter ist zum Dämpfen der Bewegung des Oberteils 62 relativ zum Unterteil 63 ein Dämpfer 61 vorgesehen, welcher mittels eines ersten Befestigungselements 70 schwenkbar um eine zweite Drehachse 68 mit der ersten Schere 65 verbunden und mittels eines zweiten Befestigungselements 71 schwenkbar um eine dritte Schwenkachse mit dem Unterteil 63 verbunden. Der Höhenbegrenzer 1 ist mittels eines dritten Befestigungselements 72 schwenkbar um die zweite Drehachse 68 mit der ersten Schere 65 verbunden und mittels eines vierten Befestigungselements 73 schwenkbar um die dritte Schwenkachse mit dem Unterteil 63 verbunden. Das bedeutet, dass der Dämpfer 61 und der Höhenbegrenzer 1 denselben Abstand von der zweiten Drehachse 68 zu der dritten Drehachse 69 aufweisen. Insbesondere sind die Erstreckungsrichtung L des Höhenbegrenzers 1 und eine Erstreckungsrichtung L" des Dämpfers 61 parallel zueinander angeordnet.

Die Auslenkung des Oberteils 62 gegenüber dem Unterteil 63 wird dabei durch den Höhenbegrenzer 1 begrenzt, wobei eine Auslenkung nach oben begrenzt wird durch den Anschlag des Stiftelements 5 an der ersten Berandung 7 des ersten Hülsenelements 6 und nach unten begrenzt wird durch den Anschlag des Stiftelements 5 an dem ersten Ende 8 des Langlochs 3. Es ist auch denkbar, dass ein zweites Hülsenelement (hier nicht gezeigt) anstelle des ersten Endes 8 als Anschlag dienen kann.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Höhenbegrenzer
- 2: Grundkörper
- 3: Langloch
- 4: Kolbenstangenelement
- 5: Stiftelement
- 6: erstes Hülsenelement
- 7: erste Berandung
- 8: erstes Ende des Langlochs
- 9: zweites Ende des Langlochs
- 10: erster Bowdenzug
- 11: erstes Ende des ersten Bowdenzugs
- 12: erstes Federelement
- 13: erstes Federende
- 14: zweites Federende
- 15: erstes Befestigungsohr
- 16: zweites Befestigungsohr
- 17: elastisches Element
- 18: erstes Führungselement
- 19: erste Führungsschiene
- 20: Aussparung
- 21: Pfeil
- 22: Abstand
- 23: Ganghöhe
- 24: Berg
- 25: Tal
- 26: erster Basisabschnitt des ersten Führungselements
- 27: zweiter Basisabschnitt des ersten Führungselements
- 28: erstes Ende des zweiten Basisabschnitts
- 29: zweites Ende des zweiten Basisabschnitts
- 30: erste Einkerbung
- 31: erster Materialeintrag
- 32: erster Abschnitt des ersten Materialeintrags
- 33: zweiter Abschnitt des ersten Materialeintrags
- 34: erstes Ende des ersten Hülsenelements
- 35: erstes Ende des Kolbenstangenelements
- 36: erstes Gleitelement
- 37: innere Oberfläche
- 38: erste Ausdehnung
- 39: zweite Ausdehnung
- 40: zweites Gleitelement
- 41: drittes Gleitelement
- 42: erster Abschnitt des zweiten Gleitelements
- 43: zweiter Abschnitt des zweiten Gleitelements
- 44: erster Abschnitt des dritten Gleitelements
- 45: zweiter Abschnitt des dritten Gleitelements
- 46: zweites Hülsenelement
- 47: zweites Federelement
- 48: zweiter Bowdenzug
- 49: erstes Ende des zweiten Bowdenzugs
- 50: zweite Führungsschiene
- 51: zweite Berandung
- 52: zweites Führungselement
- 53: erstes Ende des zweiten Federelements
- 54: zweites Ende des zweiten Federelements
- 60: Fahrzeugsitz
- 61: Dämpfer
- 62: Oberteil
- 63: Unterteil
- 64: Scherengestell
- 65: erste Schere
- 66: zweite Schere
- 67: erste Drehachse
- 68: zweite Drehachse
- 69: dritte Drehachse
- 70: erstes Befestigungselement
- 71: zweites Befestigungselement
- 72: drittes Befestigungselement
- 73: viertes Befestigungselement

## Patentansprüche

1. Verstellbarer Höhenbegrenzer (1) für einen Fahrzeugsitz (60), umfassend:
einen Grundkörper (2) mit einem Langloch (3), welches ein erstes Ende (8) und ein zweites Ende (9) aufweist,
ein gegenüber dem Grundkörper (2) verschiebbares Kolbenstangenelement (4),
**dadurch gekennzeichnet, dass**
das Kolbenstangenelement (4) ein Stiftelement (5) aufweist, welches in dem Langloch (3) geführt ist,
ein gegenüber dem Grundkörper (2) drehbares erstes Hülsenelement (6), welches den Grundkörper (2) zumindest teilweise umschließt, wobei das erste Hülsenelement (6) eine gegenüber dem Grundkörper (2) helixförmige erste Berandung (7) aufweist, wobei die erste Berandung (7) in Erstreckungsrichtung des Langlochs (3) gesehen zwischen dem ersten Ende (8) und dem zweiten Ende (9) und das Stiftelement (5) zwischen dem ersten Ende (8) und der ersten Berandung (7) angeordnet ist.

2. Verstellbarer Höhenbegrenzer (1) nach Anspruch 1,
**dadurch gekennzeichnet, dass**
das Stiftelement (5) sich durch das Langloch (3) hindurch erstreckt.

3. Verstellbarer Höhenbegrenzer (1) nach Anspruch 1 oder 2,
**dadurch gekennzeichnet, dass**
mit dem ersten Hülsenelement (6) ein erstes Ende (11) eines ersten Bowdenzugs (10) verbunden ist, wobei durch Betätigung des ersten Bowdenzugs (10) das erste Hülsenelement (6) drehbar ist.

4. Verstellbarer Höhenbegrenzer (1) nach Anspruch 3,
**dadurch gekennzeichnet, dass**
ein erstes Federelement (12) vorgesehen ist umfassend ein erstes Federende (13) und ein zweites Federende (14), wobei das erste Federende (13) mit dem Grundkörper (2) und das zweite Federende (14) mit dem ersten Hülsenelement (6) verbunden ist.

5. Verstellbarer Höhenbegrenzer (1) nach einem der Ansprüche 1-4,
**dadurch gekennzeichnet, dass**
die erste Berandung (7) wellenförmig ausgebildet ist.

6. Verstellbarer Höhenbegrenzer (1) nach einem der Ansprüche 1-4,
**dadurch gekennzeichnet, dass**
die erste Berandung (7) einen ersten flächigen Abschnitt und einen zweiten flächigen Abschnitt aufweist.

7. Verstellbarer Höhenbegrenzer (1) nach einem der Ansprüche 1-6,
**dadurch gekennzeichnet, dass**
ein erstes Befestigungsohr (15) an dem Grundkörper (2) und ein zweites Befestigungsohr (16) an dem Kolbenstangenelement (4) angeordnet sind, wobei das erste (15) und das zweite Befestigungsohr (16) jeweils ein elastisches Element (17) aufweisen.

8. Verstellbarer Höhenbegrenzer (1) nach Anspruch 7,
**dadurch gekennzeichnet, dass**
das elastische Element (17) aus Cellasto besteht.

9. Verstellbarer Höhenbegrenzer (1) nach Anspruch 3,
**dadurch gekennzeichnet, dass**
ein erstes Führungselement (18) vorgesehen ist, welches mit dem Grundkörper (2) starr verbunden ist und vorgesehen ist, den ersten Bowdenzug (10) zu führen.

10. Fahrzeugsitz (6) mit einem verstellbaren Höhenbegrenzer (1) nach einem der Ansprüche 1-9.

## Claims

1. An adjustable height limiter (1) for a vehicle seat (60), comprising:
a main body (2) having a slot (3) which has a first end (8) and a second end (9),
a piston rod element (4) which is displaceable with respect to the main body (2),
**characterised in that**
the main body (2) having a pin element (5) which is guided in the slot (3),
a first sleeve element (6) which is rotatable with respect to the main body (2) and at least partially surrounds the main body (2), the first sleeve element (6) having a first boundary (7) which is helical with respect to the main body (2), the first boundary (7) being arranged between the first end (8) and the second end (9) when viewed in the extension direction of the slot (3), and the pin element (5) being arranged between the first end (8) and the first boundary (7).

2. The adjustable height limiter (1) according to claim 1,
**characterised in that**
the pin element (5) extends through the slot (3).

3. The adjustable height limiter (1) according to claim 1 or 2,
**characterised in that**
a first end (11) of a first Bowden cable (10) is connected to the first sleeve element (6), the first sleeve element (6) being rotatable by actuation of the first Bowden cable (10).

4. The adjustable height limiter (1) according to claim 3,
**characterised in that**
a first spring element (12) is provided comprising a first spring end (13) and a second spring end (14), the first spring end (13) being connected to the main body (2) and the second spring end (14) to the first sleeve element (6).

5. The adjustable height limiter (1) according to any of claims 1-4,
**characterised in that**
the first boundary (7) is wave-shaped.

6. The adjustable height limiter (1) according to any of claims 1-4,
**characterised in that**
the first boundary (7) has a first planar section and a second planar section.

7. The adjustable height limiter (1) according to any of claims 1-6,
**characterised in that**
a first fastening eye (15) is arranged on the main body (2) and a second fastening eye (16) is arranged on the piston rod element (4), the first fastening eye (15) and the second fastening eye (16) each having an elastic element (17).

8. The adjustable height limiter (1) according to claim 7,
**characterised in that**
the elastic element (17) is made of Cellasto.

9. The adjustable height limiter (1) according to claim 3,
**characterised in that**
a first guide element (18) is provided which is rigidly connected to the main body (2) and is provided to guide the first Bowden cable (10).

10. A vehicle seat (6) having an adjustable height limiter (1) according to any of claims 1-9.

## Revendications

1. Limiteur de hauteur réglable (1) pour un siège de véhicule (60), comportant:
un corps de base (2) avec un trou allongé (3), lequel présente une première extrémité (8) et une seconde extrémité (9),
un élément tige de piston (4) déplaçable par rapport au corps de base (2),
**caractérisé par le fait que**
l'élément tige de piston (4) présente un élément broche (5), lequel est guidé dans le trou allongé (3),
un premier élément manchon (6) qui est apte à tourner par rapport au corps de base (2) et qui entoure au moins partiellement le corps de base (2), le premier élément manchon (6) présentant une première bordure (7) de forme hélicoïdale par rapport au corps de base (2), la première bordure (7) en regardant dans la direction d'extension du trou allongé (3) étant disposée entre la première extrémité (8) et la seconde extrémité (9) et l'élément broche (5) étant disposé entre la première extrémité (8) et la première bordure (7).

2. Limiteur de hauteur réglable (1) selon la revendication 1,
**caractérisé par le fait que**
l'élément broche (5) s'étend à travers le trou allongé (3).

3. Limiteur de hauteur réglable (1) selon l'une des revendications 1 ou 2,
**caractérisé par le fait qu'**
une première extrémité (11) d'un premier câble Bowden (10) est reliée au premier élément manchon (6), le premier élément manchon (6) étant apte à tourner par actionnement du premier câble Bowden (10).

4. Limiteur de hauteur réglable (1) selon la revendication 3,
**caractérisé par le fait qu'**
un premier élément ressort (12) est prévu, comportant une première extrémité de ressort (13) et une seconde extrémité de ressort (14), la première extrémité de ressort (13) étant reliée au corps de base (2) et la seconde extrémité de ressort (14) étant reliée au premier élément manchon (6).

5. Limiteur de hauteur réglable (1) selon l'une des revendications 1 à 4,
**caractérisé par le fait que**
la première bordure (7) est réalisée de forme ondulée.

6. Limiteur de hauteur réglable (1) selon l'une des revendications 1 à 4,
**caractérisé par le fait que**
la première bordure (7) présente une première section plate et une seconde section plate.

7. Limiteur de hauteur réglable (1) selon l'une des revendications 1 à 6,
**caractérisé par le fait qu'**
une première oreille de fixation (15) est disposée sur le corps de base (2) et une seconde oreille de fixation (16) est disposée sur l'élément tige de piston (4), la première (15) et la seconde oreille de fixation (16) présentant chacune un élément élastique (17).

8. Limiteur de hauteur réglable (1) selon la revendication 7,
**caractérisé par le fait que**
l'élément élastique (17) est constitué de Cellasto.

9. Limiteur de hauteur réglable (1) selon la revendication 3,
**caractérisé par le fait qu'**
un premier élément de guidage (18) est prévu, lequel est relié rigidement au corps de base (2) et est prévu pour guider le premier câble Bowden (10).

10. Siège de véhicule (6) comportant un limiteur de hauteur réglable (1) selon l'une des revendications 1 à 9.
